Europäisches Patentamt

European Patent Office

Office européen des brevets

(11) Publication number: **0 430 554 A2**

## (12) EUROPEAN PATENT APPLICATION

(21) Application number: 90312646.4

(22) Date of filing: 21.11.90

(51) Int. Cl.⁵: **B05B 15/04**, B05C 21/00

(30) Priority: 22.11.89 JP 136690/89 U

(43) Date of publication of application:
05.06.91 Bulletin 91/23

(84) Designated Contracting States:
**DE FR GB IT SE** Bulletin 00/1

(71) Applicant: **NAGOYA OILCHEMICAL CO., LTD.**
**213-5 Honowari Minamishibata-cho**
**Tokai-shi Aichi(JP)**

(72) Inventor: **Horiki, Seinosuke, c/o Nagoya**
**Oilchemical Co. Ltd.**

213-5 Honowari, Minamishibata-cho
Tokai-shi, Aichi(JP)
Inventor: Makino, Reiji, c/o Nagoya
Oilchemical Co. Ltd.
213-5 Honowari, Minamishibata-cho
Tokai-shi, Aichi(JP)
Inventor: Unno, Tetugi, c/o Nagoya
Oilchemical Co. Ltd.
213-5 Honowari, Minamishibata-cho
Tokai-shi, Aichi(JP)

(74) Representative: **Senior, Alan Murray et al**
**J.A. KEMP & CO., 14 South Square Gray's Inn**
**London WC1R 5LX(GB)**

(54) **A mould and a manufacturing method thereof.**

(57) A mould consisting of a board having projecting shape(s) n one side and a reinforcing groove on the other side wherein the depth of said groove is less than the thickness of said board, is provided in the present invention. Said mould may be easily punched or trimmed since the other side of said mould has no projection and said mould has no gap between the mould and the base of the punching machine or the trimming machine. Further, when said mould is used as a masking member, said mould may completely protect a part of the surface of an article since said mould is closely attached ont o said part.

## FIG. 1

# A MOULD AND A MANUFACTURING METHOD THEREOF

The present invention relates to a moulding used, for example, as a masking member which protects a part of an article from a surface treatment.

A moulding used for the above purpose may be manufactured by vacuum forming of a plastic board and then said vacuum formed board may be punched or trimmed to obtain said moulding. It is important for said punching or trimming that said moulding has a flat surface to avoid any gap between said vacuum formed board and the surface of the base when said vacuum formed board is punched or trimmed.

Further, when said moulding is used as a masking member, it is important it be closely located to a part of the surface of an article to be protected from a surface treatment. Still further, said moulding should be reinforced to avoid deformation.

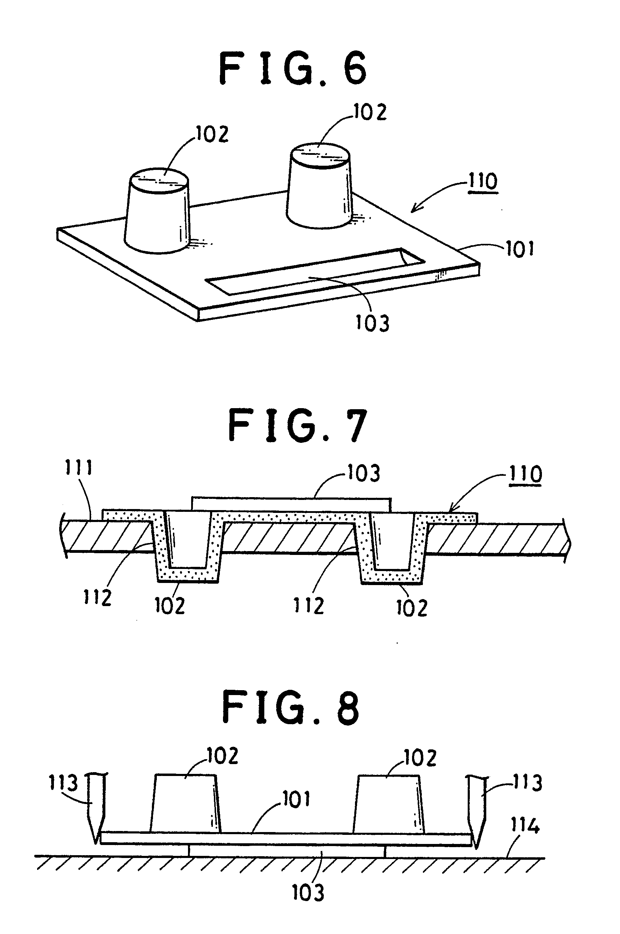

Hitherto, as shown in Figure 6, a moulding ;or mould 110 which is a masking member consists of a board 101 having a pair of vessel-like projections 102 and a reinforcing groove 103 on one side.

Said mould may be manufactured by the vacuum forming of a thermoplastic sheet. When said mould 110 is used as a masking member, said mould 110 is attached onto a part of the surface of an article 111 by inserting said projections 102 into holes 112 of said article 111 respectively to protect said part from a surface treatment as shown in Figure 7.

Since said reinforcing groove 103 projects on the other side of said board 101 of said mould 110 when said vacuum formed board 101 is trimmed to obtain said mould 110, said vacuum formed board 101 is put on a base 114 of a trimming machine and trimmed by trimming blades 113 as shown in Figure 8.

Nevertheless, due to said vacuum formed board 101 having a gap between the board and the surface of said base 114, it is difficult to trim said board 101 correctly. On the other hand, in the case that said reinforcing groove 103 is formed on the other side of said board 101, said reinforcing groove 103 projects from one side of said board 101 and if said mould 110 is used as a masking member, said mould 110 may have a gap between said mould and a part of the surface of an article. Accordingly, said part of the surface of said article cannot be completely protected by said mould 110.

Accordingly, an object of the present invention is to reinforce a mould by forming a reinforcing groove which helps prevent deformation of said mould, and to improve the workability when said mould is punched or trimmed.

According to the present invention, there is provided a moulding for use as a masking member in the surface treatment of an article, the moulding being generally board-like, having at least one projection on one side and having a reinforcing groove on the other side, the depth of the groove being less than the thickness of the board.

The invention also provides the use in surface treatment of an article of a moulding as a masking member, the moulding being generally board-like, having at least one projection on one side and having a reinforcing groove on the other side, the depth of the groove being less than the thickness of the board.

Further, the invention provides a method of masking a part of a surface of an article during surface treatment of said surface use a moulding, said moulding being generally board-like, having at least one projection on one side and having a reinforcing groove on the other side, the depth of the groove being less than the thickness of the board, the moulding being attached to the article by the projection(s) extending into hole(s) thereof.

In order that the invention may more readily be understood, the following description is given, merely by way of example, reference being made to the accompanying drawings in which:-

Fig. 1 to Fig. 4 relate to an embodiment of the present invention.

Fig. 6 to Fig. 8 relate to the prior art.

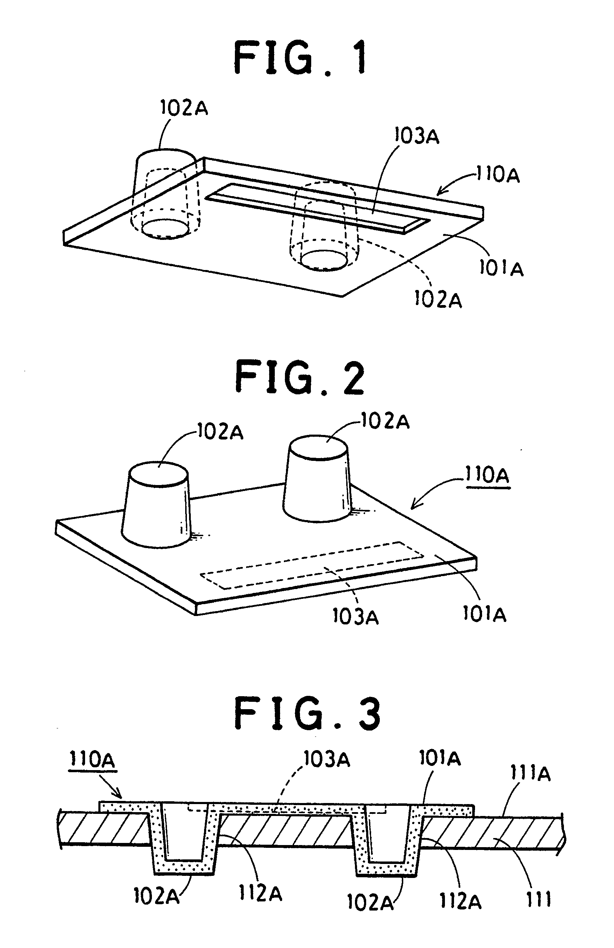

Fig. 1 is an underside perspective view of a mould as a masking member;

Fig. 2 is an upper side perspective view of said mould;

Fig. 3 is a side sectional view of said mould attached to a part of the surface of an article;

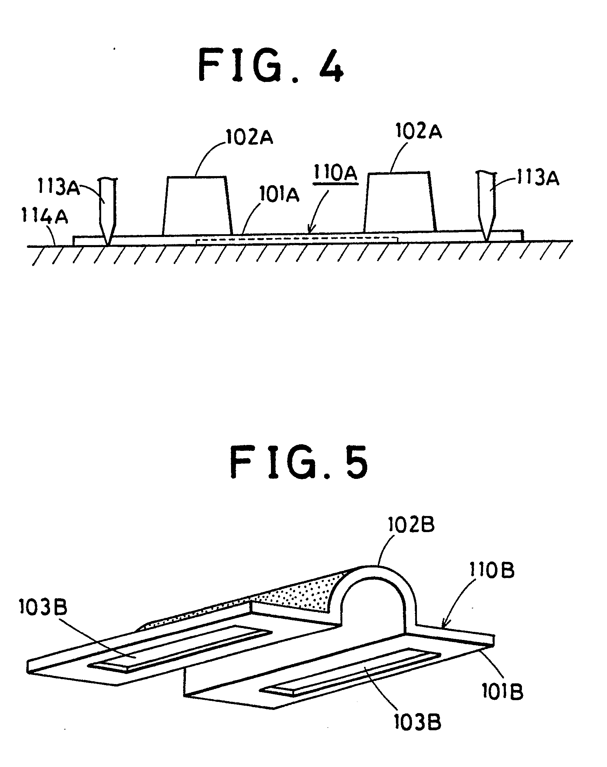

Fig. 4 is a side view showing a trimming process.

Fig. 5 is a perspective view of another embodiment of the present invention;

Fig. 6 is a perspective view of a mould;

Fig. 7 is a side sectional view of a mould attached to a part of the surface of an article;

Fig. 8 is a side view showing a trimming process.

A mould 110A is used as a masking member and consists of a board 101A having a pair of vessel-like projections 102A on one side and a reinforcing groove 103A in the other side wherein the depth of said groove 103A is less than the thickness of said board 101A.

Accordingly, said one side of said board 101A of said mould 110A has no projection caused by said reinforcing groove 103A.

As above described, said mould 110A is reinforced by said reinforcing groove 103A to prevent deformation and as shown in Fig. 3, said mould 110A is attached onto part of the surface 111A of an article 111 by inserting said vessel-like projections 102A into a pair of holes 112A respectively of said rticle 111.

Said mould 110A is closely attached onto said part of the surface 111A of an article 111 since said one side of said board 101A of said mould 110A has no projection as above described and said part of the surface 111A of an article 111 is completely protected from a surface treatment by said mould 110A as a masking member.

Said mould 110A may be manufactured by the vacuum forming or the press moulding of a plastic sheet such as a polystyrene sheet, polyethylene sheet, polypropylene sheet, polyurethane sheet and the like or a foamed plastic sheet, such as a foamed polystyrene sheet, foamed polyethylene sheet, foamed polypropylene sheet, foamed polyurethane sheet, and the like, or said mould 110A may be manufactured by the expansion moulding of expandable beads such as expandable polystyrene beads, expandable polyethylene beads, expandable polypropylene beads, and the like, or said mould 110A may be manufactured by injection moulding of plastic pellets, such as polystyrene pellets, polyethylene pellets, polypropyene pellets and the like. A fibre material such as a pasteboard, non-woven fabric, cloth, knitting, and the like, metal and the like may also be used as a material for said mould 110A.

It is desirable for reinforcing said mould 110A that the depth of said reinforcing groove 103A of said mould 110A is more than 0.1mm and accordingly it is desirable that the thickness of said board 101A of said mould 110A is more than 0.2mm. Nevertheless, to save material in forming said mould 110A it is desirable that the thickness of said board 101A be less than 10mm.

As above described, said mould 101A is moulded and after then said mould 110A is trimmed into the desired shape and to the desired size.

In said trimming process said mould 110A is put on the base 114A of a trimming machine and trimmed by trimming blades 113A, as shown in Figure 4.

When said mould 110A is trimmed as above described, said mould 110A is put on the base 114A of the trimming machine in the trimming process, and said mould 110A having no gap between the mould and the surface of said base 114A. Accordingly, an improved workability is obtained in said trimming process and said mould 110A is correctly and easily trimmed by said trimming blades 113A.

Fig. 5 relates to another embodiment of the present invention.

Referring now to Fig. 5, a backbone part 102B is formed on one side of a floor carpet 110B of an automble and said backbone part 102B has a projecting shape corresponding to the shape of the floor of said motor vehicle. Further, reinforcing grooves 103B are formed on the other side of said floor carpet 110B and the depth of said reinforcing groove 103B is less than the thickness of said floor carpet 110B. Accordingly, both sides of said floor carpet 110B have a flat or smooth surface and said floor carpet 110B has a more aesthetic appearance and is closely attached to the floor of the motor vehicle and further said floor carpet 110B is easily trimmed after moulding.

## Claims

1. A moulding for use as a masking member in the surface treatment of an article, the moulding being generally board-like, having at least one projection on one side and having a reinforcing groove on the other side, the depth of the groove being less than the thickness of the board.

2. The use in surface treatment of an article of a moulding as a masking member, the moulding being generally board-like, having at least one projection on one side and having a reinforcing groove on the other side, the depth of the groove being less than the thickness of the board.

3. A method of masking a part of a surface of an article during surface treatment of said surface use a moulding, said moulding being generally board-like, having at least one projection on one side and having a reinforcing groove on the other side, the depth of the groove being less than the thickness of the board, the moulding being attached to the article by the projection(s) extending into hole(s) thereof.

4. A method of surface treatment of a surface of an article wherein a moulding is applied to part of the surface to act as a masking member for that part, said moulding being generally board-like, having at least one projection on one side and having a reinforcing groove on the other side, the depth of the groove being less than the thickness of the board, the moulding being attached to the article by the projection(s) extending into hole(s) thereof, the surface treatment is performed and the moulding is removed.

5. A moulding which is generally board-like, having at least one projection on one side and having a reinforcing groove on the other side, the depth of the groove being less than the thickness of the board.

6. The invention of any preceding claim, wherein said moulding is a plastic sheet or a foamed plastic sheet.

7. The invention of any preceding claim, wherein the moulding is made by moulding a sheet and punching or trimming said moulded sheet.

8. A method of making a moulding according to claim 1 or 5 wherein the moulding is made by moulding a sheet and punching or trimming said moulded sheet.

# FIG. 1

# FIG. 2

# FIG. 3

5

# FIG. 4

# FIG. 5

# FIG. 6

# FIG. 7

# FIG. 8